(19) **Europäisches Patentamt**
**European Patent Office**
**Office européen des brevets**

(11) **EP 3 866 110 A1**

(12) **EUROPEAN PATENT APPLICATION**
published in accordance with Art. 153(4) EPC

(43) Date of publication:
**18.08.2021 Bulletin 2021/33**

(51) Int Cl.:
***G06T 7/20*** *(2017.01)*

(21) Application number: **19930714.1**

(86) International application number:
**PCT/CN2019/089671**

(22) Date of filing: **31.05.2019**

(87) International publication number:
**WO 2020/237675 (03.12.2020 Gazette 2020/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SZ DJI Technology Co., Ltd.**
**Shenzhen, Guangdong 518057 (CN)**

(72) Inventors:
• **ZHOU, You**
**Shenzhen, Guangdong 518057 (CN)**
• **LIU, Jie**
**Shenzhen, Guangdong 518057 (CN)**
• **ZHU, Zhenyu**
**Shenzhen, Guangdong 518057 (CN)**

(74) Representative: **Goddar, Heinz J. et al**
**Boehmert & Boehmert**
**Anwaltspartnerschaft mbB**
**Pettenkoferstrasse 22**
**80336 München (DE)**

(54) **TARGET DETECTION METHOD, TARGET DETECTION APPARATUS AND UNMANNED AERIAL VEHICLE**

(57) The present disclosure relates to a target detection method, including: determining a target object in a first image acquired by a first image acquisition device; estimating a position of the target object in a second image acquired by a second image acquisition device; determining whether an object at the second position is the same as the target object; and if yes, recording the second position as a position of the target object in the second image. According to embodiments of the present disclosure, by estimating the position of the target object in the second image and determining whether the object at the second position is the same as the target object, a relationship between the first image acquisition device and the second image acquisition device can be established, and the second image acquisition device does not need to detect the target object in the second image again, so that the tracking of the target object is coherent, which is helpful to avoid loss or errors in tracking the target object.

```
┌─────────────────────────────────────────────────────┐
│ Determine a target object in a first image acquired  │
│ by the first image acquisition device, and determine │ ⌇ S1
│ a first position of the target object in the first   │
│ image                                                │
└─────────────────────────────────────────────────────┘
                          ↓
┌─────────────────────────────────────────────────────┐
│ Estimate, based on a posture relationship between    │
│ the second image acquisition device and the first    │
│ image acquisition device as well as the first        │ ⌇ S2
│ position, a second position of the target object in  │
│ a second image acquired by the second image          │
│ acquisition device                                   │
└─────────────────────────────────────────────────────┘
                          ↓
┌─────────────────────────────────────────────────────┐
│ Determine whether an object at the second position   │ ⌇ S3
│ is the same as the target object                     │
└─────────────────────────────────────────────────────┘
                          ↓
┌─────────────────────────────────────────────────────┐
│ If yes, record the second position as a position of  │ ⌇ S4
│ the target object in the second image                │
└─────────────────────────────────────────────────────┘
```

FIG. 1

EP 3 866 110 A1

**Description**

TECHNICAL FIELD

The present invention relates to the field of unmanned aerial vehicles, and in particular, to a target detection method, a target detection apparatus, and an unmanned aerial vehicle.

BACKGROUND

With the development of unmanned aerial vehicles (UAVs), UAVs have been applied to more and more scenarios. Correspondingly, the UAVs need to meet increasingly higher requirements. For example, to enable an unmanned aerial vehicle (UAV) to sense an ambient environment, in the existing technology, a UAV is usually equipped with multiple cameras to acquire images of the ambient environment, so as to accomplish functions such as visual positioning, visual obstacle avoidance, and hovering.

However, in the existing technology, the cameras on the UAV do not operate collaboratively. A camera only detects a target in images acquired by itself. For example, when a UAV is tracking a target and the target is initially located in front of the UAV, a camera A for capturing images in front of the UAV detects the target in the acquired images and tracks this target. However, when the target moves to the left side of the UAV, and thus is out of the field of view of the camera A, the camera A can no longer detect the target. Another camera(s) on the UAV needs to detect the target in captured images. For example, a camera B for capturing images on the left side of the UAV detects the target in acquired images and tracks the target.

As the camera A and the camera B do not operate in coordination, such a target tracking manner is incoherent, and an error is likely to occur during target tracking. Moreover, the camera A has information related to the target, but the camera B does not use such information, instead it needs to re-determine the target, which may cause a waste of resources to some extent.

SUMMARY

In a first aspect of the embodiments of the present disclosure, a target detection method is provided, which is applicable to a UAV, the UAV includes at least a first image acquisition device and a second image acquisition device, where the first image acquisition device and the second image acquisition device have different fields of view, the method including:

determining a target object in a first image acquired by the first image acquisition device, and determining a first position of the target object in the first image; estimating, according to a posture relationship between the second image acquisition device and the first image acquisition device as well as the first position, a second position of the target object in a second image acquired by the second image acquisition device; determining whether an object at the second position is the same as the target object; and if yes, recording the second position as a position of the target object in the second image.

In a second aspect of the embodiments of the present disclosure, a target detection apparatus is provided, which is applicable to a UAV, the UAV includes at least a first image acquisition device and a second image acquisition device, wherein the first image acquisition device and the second image acquisition device have different fields of view, the apparatus comprises one or more processors operating independently or in coordination, and the processor is configured to:

determine a target object in a first image acquired by the first image acquisition device, and determine a first position of the target object in the first image; estimate, based on a posture relationship between the second image acquisition device and the first image acquisition device as well as the first position, a second position of the target object in a second image acquired by the second image acquisition device determine whether an object at the second position is the same as the target object; and if yes, record the second position as a position of the target object in the second image.

In a third aspect of the embodiments of the present disclosure, an unmanned aerial vehicle (UAV) is provided, including:

a body; a power system, mounted to the body and configured to provide flight power; the target detection apparatus according to any embodiment mentioned above.

According to the embodiments of the present disclosure, after the target object in the first image is determined, the second position of the target object in the second image may be estimated. If the object appearing at the second position is the same as the target object, the second position of the target object may be recorded as the position of the target object, thereby achieving tracking of the target object from the first image to the second image.

The first image is an image acquired by the first image acquisition device, and the second image is an image acquired by the second image acquisition device. Accordingly, by means of estimating the second position of the target object in the second image and determining whether the object at the second position is the same as the target object, a relationship between the first image acquisition device and the second image acquisition device can be established, and the second image acquisition device does not need to detect the target object again, so that the tracking of the target object is coherent, which is helpful to avoid loss or errors in tracking the target object.

Moreover, in the process of determining whether the object at the second position is the same as the target object, the feature(s) of the target object, namely the target object-related information acquired by the first image acquisition device is used. In addition, the feature(s) of the object in the same position in the second image, namely the target object-related information acquired by the second image acquisition device is also used. Therefore, the resources of the first image acquisition device are fully used, which avoids wasting resources to some extent.

BRIEF DESCRIPTION OF THE DRAWINGS

In order to describe the technical solutions in the embodiments of the present invention more clearly, the accompanying drawings for describing the embodiments will be briefly described below. Apparently, the accompanying drawings described below are only some embodiments of the present invention. A person of ordinary skill in the art may further obtain other accompanying drawings based on these accompanying drawings without inventive effort.

FIG. 1 is a schematic flowchart of a target detection method according to some embodiments of the present disclosure.
FIG. 2 is a schematic diagram of a first image according to some embodiments of the present disclosure.
FIG. 3 is a schematic flowchart of determining a target object in a first image acquired by a first image acquisition device according to some embodiments of the present disclosure.
FIG. 4 is another schematic flowchart of determining a target object in a first image acquired by a first image acquisition device according to some embodiments of the present disclosure.
FIG. 5 is a schematic diagram of a type of superpixels based on some embodiments of the present disclosure.
FIG. 6 is a schematic diagram of a box according to some embodiments of the present disclosure.
FIG. 7 is still another schematic flowchart of determining a target object in a first image acquired by a first image acquisition device according to some embodiments of the present disclosure.
FIG. 8 is still another schematic flowchart of determining a target object in a first image acquired by a first image acquisition device according to some embodiments of the present disclosure.
FIG. 9 is a schematic flowchart of estimating a position of the target object in a second image acquired by a second image acquisition device according to some embodiments of the present disclosure.
FIG. 10 is a schematic flowchart of determining first depth information of a target object in a first image according to some embodiments of the present disclosure.
FIG. 11 is another schematic flowchart of estimating a position of a target object in a second image acquired by a second image acquisition device according to some embodiments of the present disclosure.
FIG. 12 is a schematic diagram of an epipolar line according to some embodiments of the present disclosure.
FIG. 13 is a schematic flowchart of another target detection method according to some embodiments of the present disclosure.
FIG. 14 is a schematic diagram of a second image according to some embodiments of the present disclosure.
FIG. 15 is a schematic diagram of correcting a target object according to some embodiments of the present disclosure.
FIG. 16 is a schematic flowchart of correcting the position of a target object in a second image according to some embodiments of the present disclosure.
FIG. 17 is a schematic flowchart of determining a second rotation relationship according to some embodiments of the present disclosure.
FIG. 18 is a schematic flowchart of still another target detection method according to some embodiments of the present disclosure.
FIG. 19 is a schematic flowchart of still another target detection method according to some embodiments of the present disclosure.
FIG. 20 is a schematic flowchart of still another target detection method according to some embodiments of the present disclosure.
FIG. 21 is a schematic flowchart of still another target detection method according to some embodiments of the present disclosure.
FIG. 22 is a schematic flowchart of determining whether an object at a second position is the same as the target object according to some embodiments of the present disclosure.
FIG. 23 is a schematic flowchart of determining, based on a first feature vector and a second feature vector, whether an object at a second position is the same as a target object according to some embodiments of the present disclosure.
FIG. 24 is a schematic flowchart of still another target detection method according to some embodiments of the present disclosure.

DETAILED DESCRIPTION

The following clearly and fully describes the technical solutions in the embodiments of the present invention with reference to accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the scope of protection of the present invention. In addition, if no conflict occurs, the following embodiments and features in the embodiments may be combined with each other.

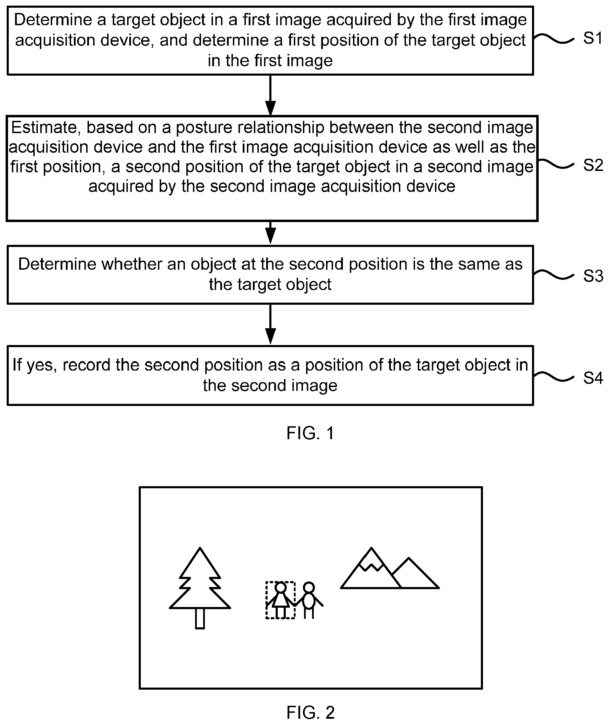

FIG. 1 is a schematic flowchart of a target detection method according to some embodiments of the present disclosure. The target detection method in this embodiment of the present disclosure is applicable to a UAV. The UAV includes at least a first image acquisition device and a second image acquisition device, where the first image acquisition device and the second image acquisition device have different fields of view.

In an embodiment, for example, the UAV includes the first image acquisition device and the second image acquisition device, where the field of view of the first image acquisition device may face the front of the UAV, and the field of view of the second image acquisition device may face the right, left, or rear of the UAV.

It should be noted that, in addition to a UAV, the embodiments of the present disclosure may be further applicable to other apparatuses that include at least a first image acquisition device and a second image acquisition device, for example, an unmanned vehicle or a monitoring system.

In addition, the fields of view being different in this embodiment may mean that the fields of view overlap partially, or the fields of view do not overlap at all.

As shown in FIG. 1, the target detection method may include the following steps:

> Step S1: determine a target object in a first image acquired by the first image acquisition device, and determine a first position of the target object in the first image.

In an embodiment, when the UAV includes a plurality of other image acquisition devices in addition to the first image acquisition device, a shift direction of the first position relative to a center of the first image may be determined first, and then among the plurality of other image acquisition devices, an image acquisition device closest to the shift direction may be selected as the second image acquisition device.

For example, if the first position is shifted leftwards relative to the center of the first image, it indicates that the target object is more likely to appear in a field of view of another image acquisition device on the left side of the first image acquisition device. Therefore, the image acquisition device on the left side of the first image acquisition device can be used as the second image acquisition device, and subsequent steps are performed with the determined second image acquisition device.

Accordingly, for the plurality of other image acquisition devices, one of them may be determined as the second image acquisition device, and an image acquired by the determined second image acquisition device is then used as the second image, to perform the subsequent steps. For images acquired by the image acquisition device(s) among the multiple other image acquisition devices other than the determined second image acquisition device, it is unnecessary to perform the subsequent steps of this embodiment, which helps reduce resources consumed by the estimation operation.

It should be noted that, as needed, the shift direction of the first position relative to the center of the first image may not be determined; instead, the subsequent steps of this embodiment are performed for each of the other image acquisition devices. It is unnecessary to determine one second image acquisition device from the plurality of other image acquisition devices, and each of the other image acquisition devices may be used as a second image acquisition device respectively, thereby omitting the step of determining the second image acquisition device, which helps increase the overall execution speed of this embodiment.

Step S2: estimate, based on a posture relationship between the second image acquisition device and the first image acquisition device as well as the first position, a second position of the target object in a second image acquired by the second image acquisition device.

In an embodiment, a field-of-view overlapping region between the field of view of the first image acquisition device and the field of view of the second image acquisition may be determined in advance. After the first image is acquired, an image overlapping region corresponding to the field-of-view overlapping region in the first image may be determined. The image overlapping region in the first image is located not only in the first image but also in the second image acquired by the second image acquisition device.

In an embodiment, after the first position of the target object in the first image is determined, it may be determined whether the first position is located in the image overlapping region. Only when the first position is located in the image overlapping region, step S2 is performed, to estimate, based on the posture relationship between the second image acquisition device and the first image acquisition device as well as the first position, the second position of the target object in the second image acquired by the second image acquisition device.

When the first position is not located in the image overlapping region, the target object is not located in the field of view of the second image acquisition device, and will not be acquired by the second image acquisition device. In this case, if the second position of the target object in the second image acquired by the second image acquisition device is still estimated based on the posture relationship between the second image acquisition device and the first image acquisition device as well as the first position, because the target object is not acquired by the second image acquisition device, the target object will not appear in the second image, and the second position cannot be obtained through the estimation. As a result, resources are wasted by the estimation operation.

According to this embodiment, step S2 is performed only when the first position is located in the image overlapping region, to estimate, based on the posture relationship between the second image acquisition device and the first image acquisition device as well as the first position, the second position of the target object in the second image acquired by the second image acquisition device.

When the first position is located in the image overlapping region, the target object is located in the field of view of the second image acquisition device and thus will be acquired by the second image acquisition device. Therefore, the estimation operation is performed on the second image only under this condition. When the first position is not located in the image overlapping region, the estimation operation is not performed on the second image, so as to effectively avoid a waste of resources caused by the estimation operation that cannot obtain the second position.

Step S3: determine whether an object at the second position is the same as the target object.

Step S4: if yes, record the second position as a position of the target object in the second image.

It should be noted that, the second image acquisition device may include multiple sub-devices.

If only one sub-device acquires a second image in which the object at the second position is the same as the target object, it may be recorded that the target object only appears in the second image acquired by this sub-device, and the second position in the second image acquired by this sub-device may be used as a first position, so that this sub-device may perform steps S1 to S4 along with another sub-device or another image acquisition device, to implement continuous tracking of the target object through different image acquisition devices.

If multiple sub-devices acquire second images in which the object at the second position is the same as the target object, one sub-device may be selected from the multiple sub-devices. For example, a sub-device may be selected based on depth information of the second position in the image acquired by each sub-device (for example, a sub-device whose depth information is closest to the depth information of the center point of the target object in the first image may be selected) or based on priorities of the sub-devices (for example, a sub-device with a highest priority may be selected, for example, a sub-device with the highest resolution has the highest priority), and the second position in the second image acquired by the selected sub-device may be used as a first position, so that this sub-device may perform steps S1 to S4 along with another sub-device or another image acquisition device, to implement continuous tracking of the target object through different image acquisition devices.

In an embodiment, to facilitate calculations, the target object determined in the image may be represented by a region of interest (ROI). The region of interest may be a circumscribed rectangle, a circumscribed circle, a circumscribed ellipse or the like of the target object. For example, as shown in FIG. 2, the target object is the person on the left, and the target object determined in the image may be a circumscribed rectangle of the person in the image, that is, a region in the dashed box shown in FIG. 2. To make the description concise, the region of interest is not mentioned in each embodiment in the following descriptions. However, in an implementation, related parameters of the target object may be determined based on the region of interest of the target object. For example, the determining of the center point of the target object may be determining the center point of the region of interest of the target object.

According to some embodiments of the present disclosure, after the target object in the first image and the first position of the target object in the first image are determined, the second position of the target object in the second image may be estimated based on the posture relationship between the second image acquisition device and the first image acquisition device as well as the first position. If the object appearing at the second position is the same as the target object, the second position may be recorded as the position of the target object in the second image.

Therefore, it may be determined that the target object appears in the second image, and then the second position may be used as a first position to determine whether the target object appears in images acquired by other image acquisition devices, thereby implementing tracking of the target object from the first image to the second image and subsequent tracking from the second image to following images. The other image acquisition devices may be image acquisition devices different from the second image acquisition device.

The first image is an image acquired by the first image acquisition device, and the second image is an image acquired by the second image acquisition device. Therefore, by means of estimating the second position of the target object in the second image and determining whether the object at the second position is the same as the target object, a relationship between the first image acquisition device and the second image acquisition device may be established, and the second image acquisition device does not need to detect the target object again, so that the tracking of the target object is coherent, which is helpful to avoid loss or errors in tracking the target object.

Moreover, in the process of determining whether the object at the second position is the same as the target object, not only the target object-related information acquired by the first image acquisition device but also the target object-related information acquired by the second image acquisition device is used, so that resources of the first image acquisition device are fully used, which avoids wasting resources to some extent.

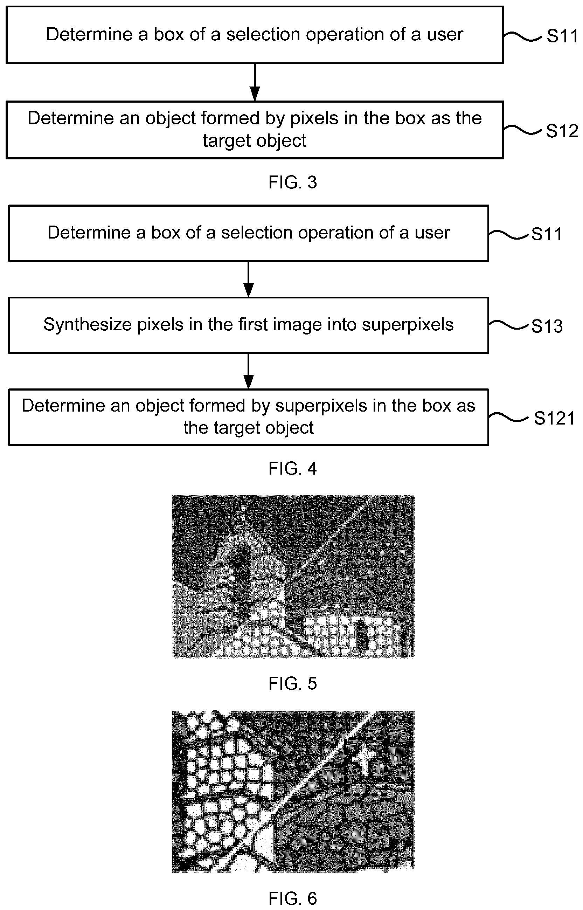

FIG. 3 is a schematic flowchart of determining a target object in a first image acquired by the first image acquisition device according to an embodiment of the present disclosure. As shown in FIG. 3, the step of determining a target object in a first image acquired by the first image acquisition device includes:

> Step S11: determine a box of a selection operation of a user.

Step S12: determine an object formed by pixels in the box as the target object.

In an embodiment, a user may determine the target object through a selection operation. After the box of the selection operation of the user is determined, an object formed by pixels in the box is determined as the target object. The user may perform a selection operation on a screen of a remote control of the UAV to generate a box, or may input coordinate values to generate a box. A specific method for generating a box is not limited herein.

It should be noted that, the box in this embodiment and the region of interest in the foregoing embodiment are different. The box in this embodiment is generated based on the selection operation of the user. For example, the user draws a box on a touch screen with a finger, and the touch screen then determines a box by using coordinates of a sensed touch signal as a box boundary. The region of interest is generated for the target object after the target object is determined through the selection operation. For example, the region of interest may be a circumscribed rectangle, a circumscribed circle, or a circumscribed ellipse of the target object.

FIG. 4 is another schematic flowchart of determining a target object in a first image acquired by the first image acquisition device according to an embodiment of the present disclosure. As shown in FIG. 4, before the object formed by the pixels in the box is determined as the target object, the step of determining a target object in a first image acquired by the first image acquisition device further includes:

> Step S13: synthesize pixels in the first image into superpixels.

The step of determining an object formed by pixels in the box as the target object includes:

> Step S121: determine an object formed by superpixels in the box as the target object.

An image includes a large quantity of pixels. An image with a higher resolution includes more pixels. If the target object is determined at the granularity of pixels, an excessively large amount of data needs to be processed, which may cause excessive burden to the image acquisition device.

In an embodiment, the pixels in the first image may be synthesized into superpixels. To synthesize pixels into superpixels means to combine a plurality of adjacent pixels with similar features (such as texture, color, and brightness) into an irregular pixel block with a specific visual significance. The pixels are grouped based on similarity between pixel features. For example, pixel blocks shown in FIG 5 may be formed, in which an algorithm for generating superpixels may be selected according to certain requirements. For example, the first image may be processed through simple linear iterative clustering (SLIC) Graph-based, Normalized cut (NCut), Turbopixel, Quick-shift, Graph-cut a, or Graph-cut b algorithms, to generate superpixels in the first image.

By generating superpixels, features of the image can be expressed by using fewer superpixels in substitution of the original large number of pixels in the image, which helps reduce the complexity of subsequent image processing. The user may determine the target object through the selection operation, and after the box of the selection operation of the user is determined, the object formed by the superpixels in the box is determined as the target object. For example, in the region in the dashed box shown in FIG. 6, since the number of superpixels is relatively small, superpixels located in the dashed box can be easily determined, thereby determining the object formed by the superpixels in the box as the target object.

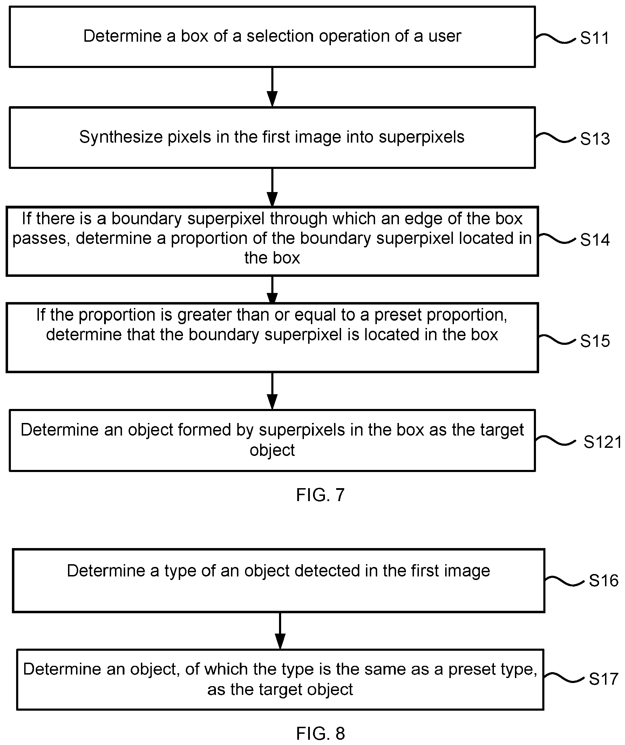

FIG. 7 is still another schematic flowchart of determining a target object in a first image acquired by the first image acquisition device according to an embodiment of the present disclosure. As shown in FIG. 7, before the object formed by the superpixels in the box is determined as the target object, the method further includes:

> Step S14: if there is a boundary superpixel through which an edge of the box passes, determine a proportion of the boundary superpixel located in the box.

Step S15: if the proportion is greater than or equal to a preset proportion, determine that the boundary superpixel is located in the box.

In an embodiment, the boundary superpixel through which the edge of the box passes is partially located in the box and partially located outside the box. To determine whether the boundary superpixel belongs to the target object, the proportion of the boundary superpixel located in the box may be determined, and if the proportion of the boundary superpixel located in the box is greater than or equal to the preset proportion, the boundary superpixel is determined as being located in the box, that is, the boundary superpixel is a superpixel forming the target object.

FIG. 8 is still another schematic flowchart of determining a target object in a first image acquired by the first image acquisition device according to an embodiment of the present disclosure. As shown in FIG. 8, the step of determining a target object in a first image acquired by the first image acquisition device includes:

> Step S16: determine a type of an object detected in the first image.

Step S17: determine an object, of which the type is the same as a preset type, as the target object.

In an embodiment, in addition to the manner of determining the target object by the user through the selection operation as shown in FIG. 3, it is also possible to determine an object of a specific type in the image as the target object. Specifically, the types of all objects detected in the first image may be determined, for example, the objects may include a human being, a tree, a traffic sign, a motor vehicle, a non-motor vehicle, a building, and the like, and then an object whose type is the same as the preset type is determined as the target object. Based on this embodiment, the target object may be determined automatically, where the preset type may be set as needed.

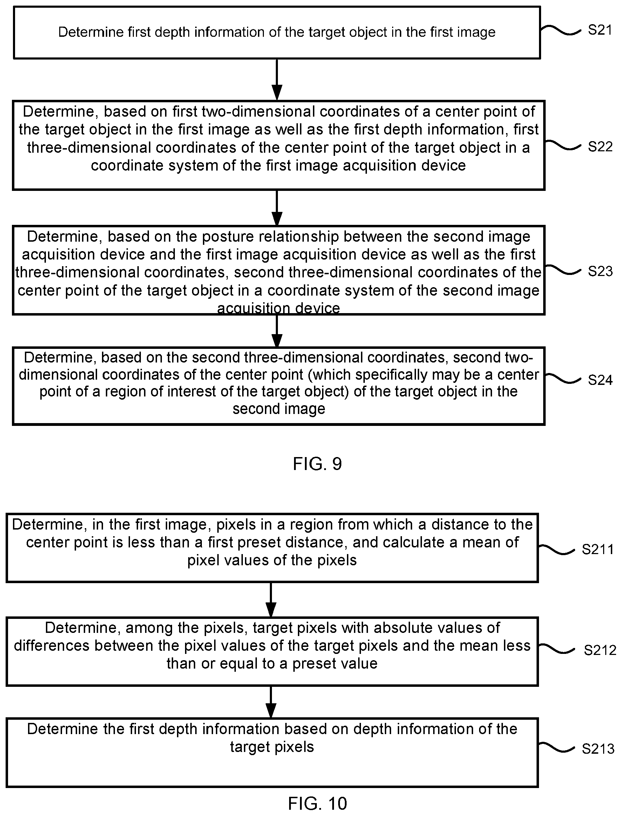

FIG. 9 is a schematic flowchart of estimating a position of the target object in a second image acquired by the second image acquisition device according to an embodiment of the present disclosure. As shown in FIG. 9, the step of estimating, based on a posture relationship between the second image acquisition device and the first image acquisition device as well as the first position, a second position of the target object in a second image acquired by the second image acquisition device includes:

> Step S21: determine first depth information of the target object in the first image.

Step S22: determine, based on first two-dimensional coordinates of a center point of the target object in the first image as well as the first depth information, first three-dimensional coordinates of the center point of the target object in a coordinate system of the first image acquisition device.

Step S23: determine, based on the posture relationship between the second image acquisition device and the first image acquisition device as well as the first three-dimensional coordinates, second three-dimensional coordinates of the center point of the target object in a coordinate system of the second image acquisition device.

Step S24: determine, based on the second three-dimensional coordinates, second two-dimensional coordinates of the center point (which specifically may be a center point of a region of interest of the target object) of the target object in the second image.

In an embodiment, if the depth information of the object in the first image can be obtained (for example, if the first image acquisition device is a binocular camera, the depth information of the object in the first image acquired by the binocular camera can be determined), first depth information $d$ of the target object in the first image may be determined. In addition, first two-dimensional coordinates $p$ of the center point of the target object in the first image may be further determined, where $p = (u, v)^T$.

Three-dimensional coordinates P of the center point of the target object in the coordinate system of the first image acquisition device may be determined based on $d$ and $p$, where $P = (x,y,z)^T = K^{-1}d*(u,v,1)^T$. Further, according to the posture relationship between the second image acquisition device and the first image acquisition device as well as the first three-dimensional coordinates, second three-dimensional coordinates $[x',y',z']^T = KR(P-t)$ of the center point of the target object in the coordinate system of the second image acquisition device may be further determined. The posture relationship between the second image acquisition device and the first image acquisition device includes a rotation relationship R and a displacement relationship t, where R and t may be represented in the form of a matrix. Based on the second three-dimensional coordinates, second two-dimensional coordinates $p' = [u',v']^T = [x'/z', y'/z']^T$ of the center point of the target object in the second image may be determined.

K is a camera standard matrix, representing an internal reference of the first image acquisition device. Using a finite projection camera as an example,

$$K = \begin{bmatrix} \alpha_x & \gamma & \mu_0 \\ 0 & \alpha_y & v_0 \\ 0 & 0 & 1 \end{bmatrix},$$ where $\alpha_x = fm_x$, $\alpha_y = fm_y$, $f$ is a focal length of the camera, $m_x$ is the number of pixels per unit distance in an x direction of a coordinate system of the camera, $m_y$ is the number of pixels per unit distance in a y direction of the coordinate system of the camera, $\gamma$ is a distortion parameter between the x direction and the y direction, and $\mu_0$ and $v_0$ are coordinates of an optical center.

FIG. 10 is a schematic flowchart of determining first depth information of the target object in the first image according to an embodiment of the present disclosure. As shown in FIG. 10, the step of determining first depth information of the target object in the first image includes:

> Step S211: determine, in the first image, pixels in a region from which a distance to the center point is less than a first preset distance, and calculate a mean of pixel values of the pixels.

Step S212: determine, among the pixels, target pixels with absolute values of differences between the pixel values of the target pixels and the mean less than or equal to a preset value.

Step S213: determine the first depth information based on depth information of the target pixels.

In an embodiment, because the first depth information of the target object is mainly related to pixels near the center point of the target object (for example, the center point of the region of interest), pixels in a region from which the distance to the center point is less than a first preset distance may be determined in the first image, and a mean of the pixels is calculated, so that target pixels are determined among such pixels, where absolute values of differences between the pixel values of the target pixels and the mean are less than or equal to a preset value, that is, the pixel values of the target pixels are close to the mean. Because the pixel values of the target pixels are close to the mean, the pixel values of the target pixels do not differ greatly therebetween. Therefore, the target pixels are more likely to be pixels at similar depths in the image. Then, the first depth information is determined based on the depth information of the target pixels. The depth information used as a basis does not fluctuate greatly, that is, there is little noise, which helps accurately determine the first depth information.

The preset value may be set as needed. For example, after the mean of the pixel values of the pixels is calculated, a variance $\sigma$ of the pixel values of the pixels may be further calculated. The preset value then may be set based on the variance, for example, set to $3^{\sigma}$.

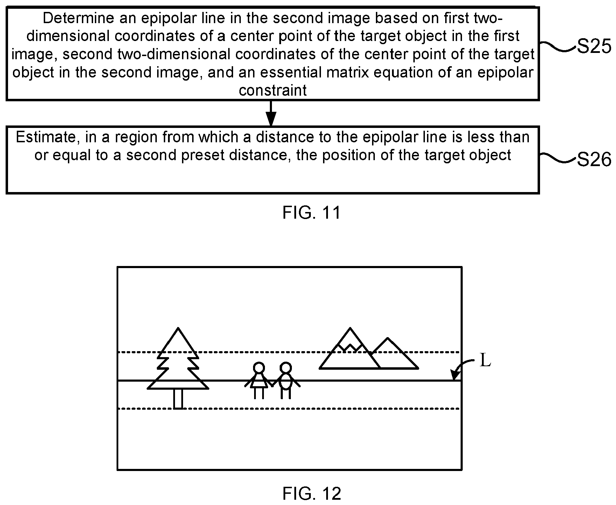

FIG. 11 is another schematic flowchart of estimating a position of the target object in a second image acquired by the second image acquisition device according to an embodiment of the present disclosure. As shown in FIG. 11, the step of estimating a position of the target object in a second image acquired by the second image acquisition device includes:

> Step S25: determine an epipolar line in the second image based on first two-dimensional coordinates of a center point of the target object in the first image, second two-dimensional coordinates of the center point of the target object in the second image, and an essential matrix equation of an epipolar constraint.

Step S26: estimate, in a region from which a distance to the epipolar line is less than or equal to a second preset distance, the position of the target object.

In an embodiment, if the depth information of the object in the first image cannot be determined (for example, when the first image acquisition device is a monocular camera; that the depth information cannot be determined herein means that the depth information cannot be calculated accurately), the position of the target object in the second image may be estimated based on the epipolar constraint.

A mathematical description of the epipolar constraint is as follows:

$$(p')^T E p = 0 \, ,$$

where E is an essential matrix and is defined as $E = R[t]$

$_{\times}$, R represents a rotation relationship between the first image acquisition device and the second image acquisition device, t represents a displacement relationship between the first image acquisition device and the second image acquisition device, and $[t]_{\times}$ is a cross product of matrices.

An epipolar line may be determined in the second image based on the epipolar constraint, for example, L shown in FIG. 12. The target object is located on the epipolar line in the second image, but a specific position of the target object cannot yet be determined. Therefore, a region from which the distance to the epipolar line is less than or equal to the second preset distance (that is, a region relatively close to the epipolar line), for example, a region between two dashed lines in FIG. 12, may be determined, and the position of the target object is estimated in this region. A method for further estimating the position of the target object is illustrated in the subsequent embodiments.

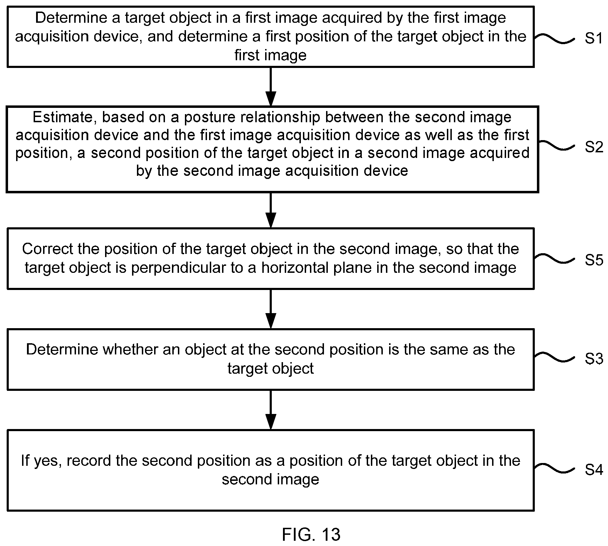

FIG. 13 is a schematic flowchart of another target detection method according to an embodiment of the present disclosure. As shown in FIG. 13, before the step of determining whether an object at the second position is the same as the target object, the method further includes:

> Step S5: correct the position of the target object in the second image, so that the target object is perpendicular to a horizontal plane in the second image.

In an embodiment, the UAV may flip during flight, and in this case, the image acquired by the image acquisition device is inclined relative to the horizontal plane. However, an algorithm for detecting the target object is generally designed for objects perpendicular to the horizontal plane. For example, during determining the region of interest of the target object, the region of interest is perpendicular to the horizontal plane. If the target image is directly determined in the second image when the image is inclined relative to the horizontal plane, the determined region of interest may include other objects, causing the determined target object to be inaccurate.

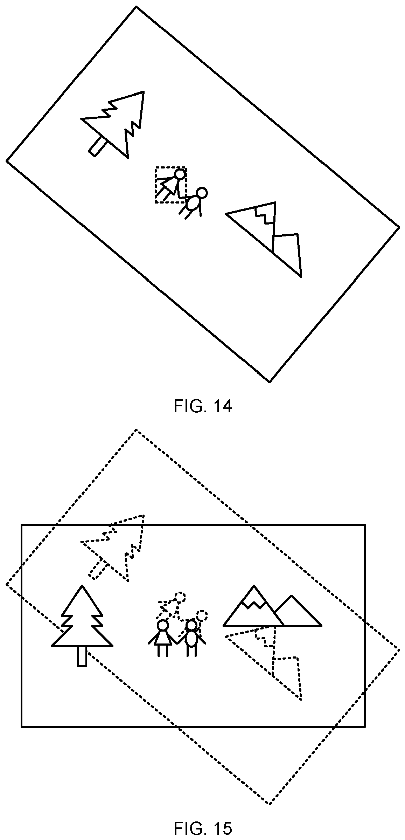

For example, the target object shown in FIG. 2 is the left person of the two persons. However, when the image is inclined relative to the horizontal plane, as shown in FIG. 14 for example, the determined region of interest of the target object may include part of the body of the right person, causing the determined target object to be inaccurate.

According to embodiments of the present disclosure, the position of the target object in the second image may be corrected first, so that the target object is perpendicular to the horizontal plane in the second image. For example, as shown in FIG. 15, the second image (as shown by the dashed line) that is inclined relative to the horizontal plane is adjusted to be perpendicular to the horizontal plane (as shown by the solid line), to ensure that the target object can be correctly determined in the second image subsequently, thereby tracking the target object correctly.

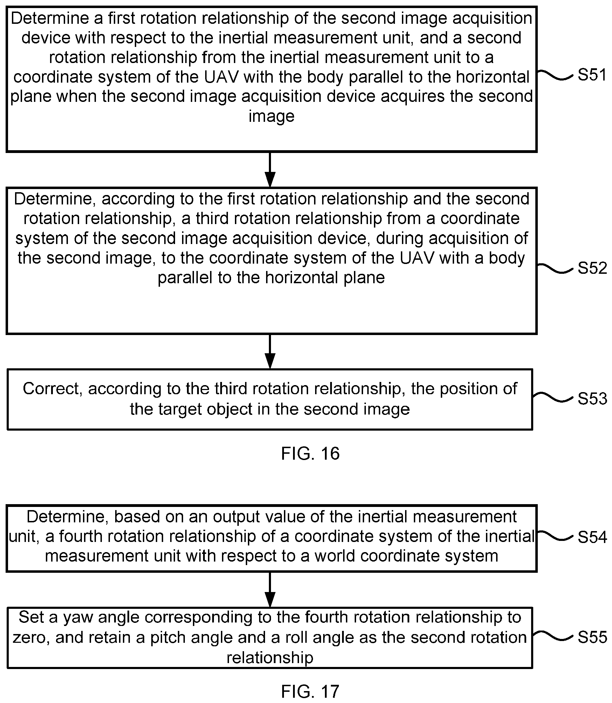

FIG. 16 is a schematic flowchart of correcting the position of the target object in the second image according to an embodiment of the present disclosure. As shown in FIG. 16, the UAV includes an inertial measurement unit (IMU), and the step of correcting the position of the target object in the second image includes:

> Step S51: determine a first rotation relationship of the second image acquisition device with respect to the inertial measurement unit, and a second rotation relationship from the inertial measurement unit to a coordinate system of the UAV with a body parallel to the horizontal plane when the second image acquisition device acquires the second image.

Step S52: determine, according to the first rotation relationship and the second rotation relationship, a third rotation relationship from a coordinate system of the second image acquisition device, during acquisition of the second image, to the coordinate system of the UAV with the body parallel to the horizontal plane.

Step S53: correct, according to the third rotation relationship, the position of the target object in the second image.

In an embodiment, a point $p_1$ in the coordinate system of the first image acquisition device and a point $p_2$ which is in the coordinate system of the second image acquisition device and corresponds to the point $p_1$ have the following relationship:

$$ p_1 = KR_{c_1w}P^w \, , \quad p_2 = KR_{c_2w}P^w \, ; $$

K is a camera standard matrix, that is, an internal reference of the first image acquisition device and the second image acquisition device (for ease of calculation, two cameras with the same internal reference are used as the first image acquisition device and the second image acquisition device herein; in actual application, two cameras with different internal references may be selected as the first image acquisition device and the second image acquisition device), $P^w$ represents a point in a world coordinate system, $R_{c_1w}$ represents a rotation relationship of the first image acquisition device with respect to the world coordinate system, and $R_{c_1w}$ represents a rotation relationship of the second image acquisition device with respect to the world coordinate system, where $R_{c_1w}$ and $R_{c_2w}$ may be represented by matrices.

It can be obtained based on the above relationship:

$$ p_2 = KR_{c_2w}R_{c_1w}^{-1}K^{-1}p_1 = KR_{c_2c_1}K^{-1}p_1 \, ; $$

$R_{c_2c_1}$ represents a rotation relationship of the first image acquisition device with respect to the second image acquisition device, where $R_{c_2c_1}$ may be represented by a matrix.

To offset the rotation of the second image acquisition device relative to the horizontal plane so that the second image is perpendicular to the horizontal plane, a point $p_c$ in the second image needs to be transformed to a point $p_{bl}$ in the coordinate system of the UAV with the body parallel to the horizontal plane, where bl represents a body level, and herein represents the coordinate system of the UAV when its body is parallel to the horizontal plane. In this case, $R_{c_2c_1}$ in the foregoing formula may be replaced with $R_{bl\_c}$, where $R_{bl\_c}$ represents a rotation relationship from the coordinate system of the second image acquisition device, during acquisition of the second image, to the coordinate system of the UAV with the body parallel to the horizontal plane (namely, the third rotation relationship as mentioned above). Accordingly, it may be obtained as follows:

$$ p_{bl} = KR_{bl\_c}K^{-1}p_c \, ; $$

However, $R_{bl\_c}$ cannot be obtained directly, but needs to be calculated indirectly based on $R_{bl\_i}$ and $R_{i\_c}$. $R_{i\_c}$ represents a rotation relationship of the second image acquisition device with respect to the inertial measurement unit (namely, the first rotation relationship as mentioned above), where $R_{i\_c}$ is determined by an assembly relationship between structures, and can be obtained during factory calibration; $R_{bl\_i}$ represents a rotation relationship from the inertial measurement unit to the coordinate system of the UAV with the body parallel to the horizontal plane when the second image acquisition device acquires the second image (namely, the second rotation relationship as mentioned above), and $R_{bl\_i}$ may be obtained according to a measurement result of the inertial measurement unit.

$$ R_{bl\_c} = R_{bl\_i}R_{i\_c} \, , $$

and therefore

$$ p_{bl} = KR_{bl\_i}R_{i\_c}K^{-1}p_c \, ; $$

Hence, the third rotation relationship $R_{bl\_c}$ may be obtained according to the first rotation relationship $R_{i\_c}$ and the second rotation relationship $R_{bl\_i}$. The position $p_c$ of the target object in the second image may be corrected according to the third rotation relationship $R_{bl\_c}$.

FIG. 17 is a schematic flowchart of determining a second rotation relationship according to an embodiment of the present disclosure. As shown in FIG. 17, the second rotation relationship is determined in the following manner:

Step S54: determine, based on an output value of the inertial measurement unit, a fourth rotation relationship of a coordinate system of the inertial measurement unit with respect to a world coordinate system.

Step S55: set a yaw angle corresponding to the fourth rotation relationship to zero, and retain a pitch angle and a roll angle as the second rotation relationship.

In an embodiment, the fourth rotation relationship of the coordinate system of the inertial measurement unit with respect to the world coordinate system may be determined based on the output value of the inertial measurement unit. A yaw angle, a pitch angle and a roll angle of the inertial measurement unit with respect to the world coordinate system can be determined by transforming the fourth rotation relationship into an Euler angle; a matrix obtained by setting the yaw angle to zero may be used for expressing the second rotation relationship $R_{bl\_i}$.

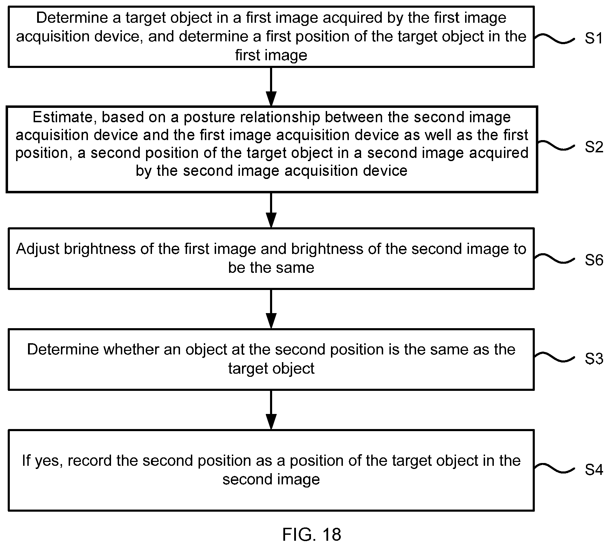

FIG. 18 is a schematic flowchart of still another target detection method according to an embodiment of the present disclosure. As shown in FIG. 18, before the step of determining whether an object at the second position is the same as the target object, the method further includes:

Step S6: adjust brightness of the first image and brightness of the second image to be the same.

The same object recognized in images with different brightness may be different. For example, the same object may be recognized as different objects.

In this embodiment, the brightness of the first image and the brightness of the second image may be adjusted to be the same first, and then it is determined whether the object at the second position is the same as the target object. This helps accurately determine that the target object in the second image is the same as the target object in the first image.

In an embodiment, the manner of adjusting the brightness of the first image and the brightness of the second image to be the same includes, but is not limited to, Multi-Scale Retinex (MSR), MSRCR, classic Canonical Gain/Offset, and other algorithms.

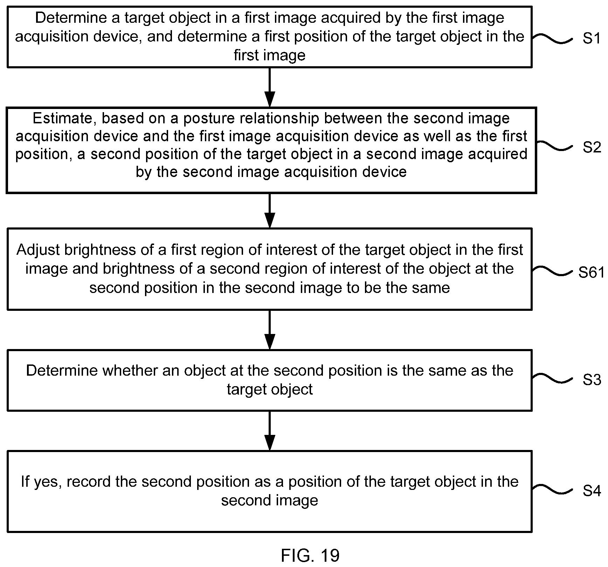

FIG. 19 is a schematic flowchart of still another target detection method according to an embodiment of the present disclosure. As shown in FIG. 19, the step of adjusting brightness of the first image and brightness of the second image to be the same includes:

Step S61: adjust brightness of a first region of interest of the target object in the first image (such as a circumscribed rectangle, a circumscribed circle, or a circumscribed ellipse of the target object in the first image) and brightness of a second region of interest of the object at the second position in the second image (such as a circumscribed rectangle, a circumscribed circle, or a circumscribed ellipse of the target object in the second image) to be the same.

In an embodiment, it only needs to determine whether the object at the second position is the same as the target object, in which only the object at the second position in the second image needs to be compared with the target object, while objects not at the second position do not need to be compared with the target object. Therefore, only the brightness of the first region of interest of the target object in the first image and the brightness of the second region of interest of the object at the second position in the second image are adjusted, which helps reduce the amount of data to be processed and reduce the resource consumption.

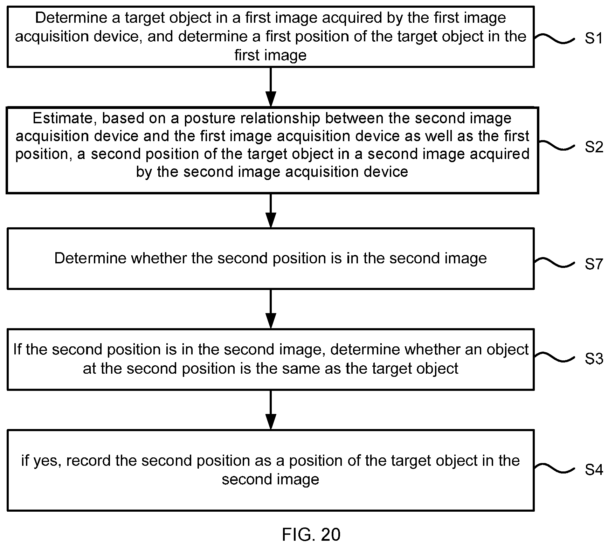

FIG. 20 is a schematic flowchart of still another target detection method according to an embodiment of the present disclosure. As shown in FIG. 20, before the step of determining whether an object at the second position is the same as the target object, the method further includes:

Step S7: determine whether the second position is in the second image.

If the second position is in the second image, step S3 is performed, to determine whether the object at the second position is the same as the target object.

In an embodiment, the second two-dimensional coordinates $p'$ of the center point of the target object in the second image is essentially a projection, in the second image, of the first two-dimensional coordinates $p$ of the center point of the target object in the first image. Due to the limited size of the second image, the projection $p'$ may fall outside the second image, and in this case, it may be determined that the second image acquisition device does not acquire the target object, and thus it is unnecessary to perform subsequent operations, such as determining whether the object at the second position is the same as the target object, thereby reducing the amount of data to be processed and reducing the resource consumption.

If $p'$ is in the second image, it may be determined that the second image acquisition device acquires the target object, and subsequent operations, such as determining whether the object at the second position is the same as the target object, may be performed.

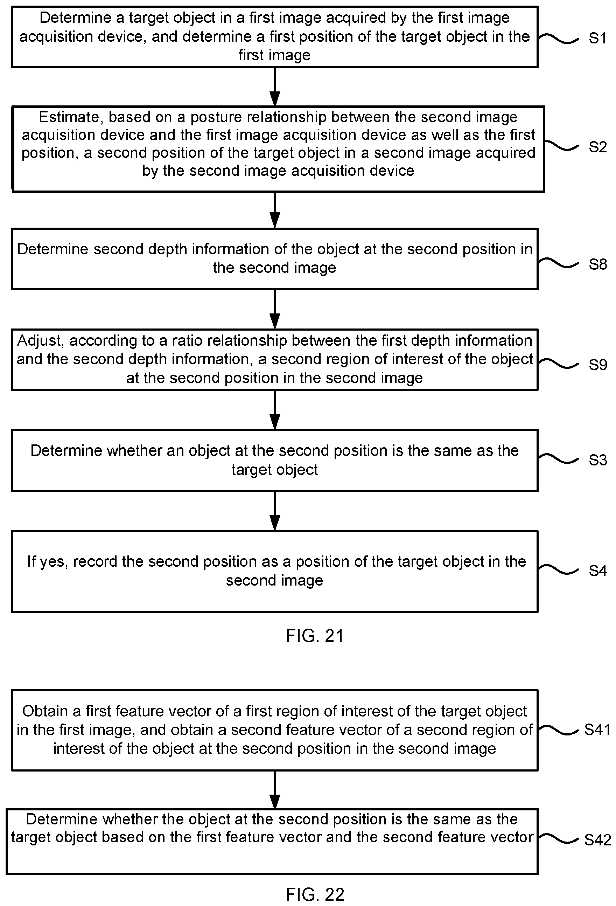

FIG. 21 is a schematic flowchart of still another target detection method according to an embodiment of the present disclosure. As shown in FIG. 21, before the step of determining whether an object at the second position is the same as the target object, the method further includes:

Step S8: determine second depth information of the object at the second position in the second image.

Step S9: adjust, according to a ratio relationship between the first depth information and the second depth information, a second region of interest of the object at the second position in the second image.

In an embodiment, the object becomes larger in the image as it is closer to the camera, while in the image, the distance from the object to the camera is represented by depth information, and the size of the object affects the size of the region of interest. Therefore, to accurately determine the region of interest, the second region of interest of the object in the second image may be adjusted based on the ratio relationship between the first depth information and the second depth information.

For example, if a ratio of the first depth information to the second depth information is greater than 1, it indicates that the object has a relatively large depth in the first image and is relatively far away from the camera, and therefore has a relatively small size; and the object has a relatively small depth in the second image and is relatively close to the camera, and therefore has a relatively large size. Therefore, the first region of interest may be scaled up to serve as the second region of interest.

For example, if the ratio of the first depth information to the second depth information is less than 1, it indicates that the object has a relatively small depth in the first image and is relatively close to the camera, and therefore has a relatively large size; and the object has a relatively large depth in the second image and is relatively far away from the camera, and therefore has a relatively small size. Therefore, the first region of interest may be scaled down to serve as the second region of interest.

If the ratio of the first depth information to the second depth information is equal to 1, the first region of interest can be directly used as the second region of interest without size adjustment.

FIG. 22 is a schematic flowchart of determining whether an object at the second position is the same as the target object according to an embodiment of the present disclosure. As shown in FIG. 22, the step of determining whether an object at the second position is the same as the target object includes:

> Step S41: obtain a first feature vector of a first region of interest of the target object in the first image, and obtain a second feature vector of a second region of interest of the object at the second position in the second image.

Step S42: determine whether the object at the second position is the same as the target object based on the first feature vector and the second feature vector.

In an embodiment, the first feature vector of the first region of interest and the second feature vector of the second region of interest may be obtained, and it is determined, based on the first feature vector and the second feature vector, whether the object at the position is the same as the target object.

The first feature vector and the second feature vector may be vectors of local maximal occurrence (LOMO) features. A similarity between the first feature vector and the second feature vector may be obtained through comparison. For example, the similarity may be determined by calculating a distance between the first feature vector and the second feature vector. A smaller distance indicates a higher similarity, and therefore the object in the first region of interest and the object in the second region of interest can be determined as the same object.

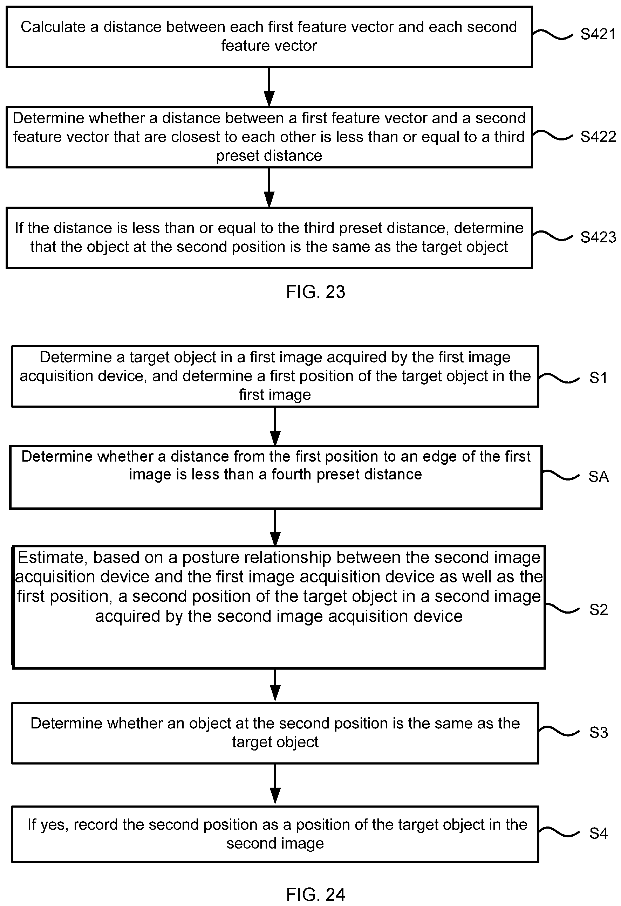

FIG. 23 is a schematic flowchart of determining, based on the first feature vector and the second feature vector, whether the object at the second position is the same as the target object according to an embodiment of the present disclosure. As shown in FIG. 23, the step of determining whether the object at the second position is the same as the target object according to the first feature vector and the second feature vector includes:

> Step S421: calculate a distance between each first feature vector and each second feature vector.

Step S422: determine whether a distance between a first feature vector and a second feature vector that are closest to each other is less than or equal to a third preset distance.

Step S423: if the distance is less than or equal to the third preset distance, determine that the object at the second position is the same as the target object.

In an embodiment, the similarity between the first feature vector and the second feature vector may be determined based on the distance between the first feature vector and the second feature vector. A smaller distance indicates a higher similarity, and therefore the object in the first region of interest and the object in the second region of interest can be determined as the same object.

It should be noted that, there may be one or more first regions of interest, and there may be one or more second regions of interest. If there are multiple first regions of interest, multiple first feature vectors can be obtained; if there are multiple second regions of interest, multiple second feature vectors can be obtained. In this case, all combinations of the multiple first feature vectors and the multiple second feature vectors may be traversed to calculate distances between the first feature vectors and the second feature vectors, and a group formed by a first feature vector and a second feature vector that are closest to each other may be used as a candidate vector group. Further, it is determined whether the distance between the vectors in this group is small enough, for example, whether the distance is less than or equal to a third preset distance. If the distance is less than or equal to the third preset distance, it may be determined that the distance between the vectors in this group is small enough, indicating that the first feature vector and the second feature vector are close enough, and the first region of interest and the second region of interest are similar enough. Then, it can be determined that the object in the first region of interest and the object in the second region of interest are the same object.

FIG. 24 is a schematic flowchart of still another target detection method according to an embodiment of the present disclosure. As shown in FIG. 24, before the step of estimating, based on a posture relationship between the second image acquisition device and the first image acquisition device as well as the first position, a second position of the target object in a second image acquired by the second image acquisition device, the method further includes:

> Step SA: determine whether a distance from the first position to an edge of the first image is less than a fourth preset distance.

If the distance from the first position to the edge of the first image is less than the fourth preset distance, step S2 is performed, to estimate, based on the posture relationship between the second image acquisition device and the first image acquisition device as well as the first position, the second position of the target object in the second image acquired by the second image acquisition device.

In an embodiment, when the target object is in the first image and has a large enough distance to the edge of the first image, it can be determined that the target object is located in a central region of the first image. In this case, the target object is mainly located in a central region of the field of view of the first image acquisition device.

In this embodiment, different image acquisition devices have different fields of view. To ensure that a range covered by different image acquisition devices is as large as possible, fields of view of different image acquisition devices have a small overlapping region.

Therefore, when the target object is in the central region of the first image, the target object basically is not located in the field of view of the second image acquisition device, and therefore will not be acquired by the second image acquisition device. In this case, if the second position of the target object in the second image acquired by the second image acquisition device is estimated based on the posture relationship between the second image acquisition device and the first image acquisition device as well as the first position, because the target object is not acquired by the second image acquisition device, the target object will not appear in the second image, and the second position cannot be obtained through estimation. As a result, resources are wasted by the estimation operation.

According to this embodiment, step S2 is performed only when the distance from the first position to the edge of the first image is less than the fourth preset distance (which may be set as needed), to estimate, based on the posture relationship between the second image acquisition device and the first image acquisition device as well as the first position, the second position of the target object in the second image acquired by the second image acquisition device.

When the distance from the first position to the edge of the first image is less than the fourth preset distance, the target object is near the edge of the first image, and is more likely to be in the field of view of the second image acquisition device, and thus will be acquired by the second image acquisition device. Therefore, the estimation operation is performed on the second image only in this case. When the distance from the first position to the edge of the first image is not less than the fourth preset distance, the estimation operation is not performed on the second image, so as to effectively avoid a waste of resources caused by the estimation operation that cannot obtain the second position.

Corresponding to the foregoing embodiments of the target detection method, the present disclosure further provides embodiments of a target detection apparatus.

A target detection apparatus provided in embodiments of the present disclosure is applicable to a UAV. The UAV includes at least a first image acquisition device and a second image acquisition device. The first image acquisition device and the second image acquisition device have different fields of view. The apparatus includes one or more processors operating independently or in coordination. The processor is configured to:

> determine a target object in a first image acquired by the first image acquisition device, and determine a first position of the target object in the first image;
> estimate, based on a posture relationship between the second image acquisition device and the first image acquisition device as well as the first position, a second position of the target object in a second image acquired by the second image acquisition device;
> determine whether an object at the second position is the same as the target object; and
> if yes, record the second position as a position of the target object in the second image.

In an embodiment, the processor(s) is configured to:

> determine a box of a selection operation of a user; and
> determine an object formed by pixels in the box as the target object.

In an embodiment, before determining the object formed by the pixels in the box as the target object, the processor(s) is further configured to:

> synthesize pixels in the first image into superpixels;
> where the processor is configured to determine an object formed by superpixels in the box as the target object.

In an embodiment, before determining the object formed by the superpixels in the box as the target object, the processor(s) is further configured to:

if there is a boundary superpixel through which an edge of the box passes, determine a proportion of the boundary superpixel located in the box; and
if the proportion is greater than or equal to a preset proportion, determine that the boundary superpixel is located in the box.

In an embodiment, the processor(s) is configured to:

determine a type of each object detected in the first image; and
determine an object, of which the type is the same as a preset type, as the target object.

In an embodiment, the processor(s) is configured to:

determine first depth information of a center point of the target object in the first image;
determine, based on first two-dimensional coordinates of the center point of the target object in the first image as well as the first depth information, first three-dimensional coordinates of the center point of the target object in a coordinate system of the first image acquisition device;
determine, based on the posture relationship between the second image acquisition device and the first image acquisition device as well as the first three-dimensional coordinates, second three-dimensional coordinates of the center point of the target object in a coordinate system of the second image acquisition device; and
determine, based on the second three-dimensional coordinates, second two-dimensional coordinates of the center point of the target object in the second image.

In an embodiment, the processor(s) is configured to:

determine, in the first image, pixels in a region from which a distance to the center point is less than a first preset distance, and calculate a mean of pixel values of the pixels;
determine, among the pixels, target pixels with absolute values of differences between the pixel values of the target pixels and the mean less than or equal to a preset value; and
determine the first depth information according to depth information of the target pixels.

In an embodiment, the processor(s) is configured to:

determine an epipolar line in the second image based on first two-dimensional coordinates of a center point of the target object in the first image, second two-dimensional coordinates of the center point of the target object in the second image, and an essential matrix equation of an epipolar constraint; and
estimate, in a region from which a distance to the epipolar line is less than or equal to a second preset distance, the position of the target object.

In an embodiment, before determining whether the object at the second position is the same as the target object, the processor(s) is further configured to:

correct the position of the target object in the second image, so that the target object is perpendicular to a horizontal plane in the second image.

In an embodiment, the processor(s) is configured to:

determine a first rotation relationship of the second image acquisition device with respect to the inertial measurement unit, and a second rotation relationship from the inertial measurement unit to a coordinate system of the UAV with a body parallel to the horizontal plane when the second image acquisition device acquires the second image;
determine, based on the first rotation relationship and the second rotation relationship, a third rotation relationship from a coordinate system of the second image acquisition device, during acquisition of the second image, to the coordinate system of the UAV with the body parallel to the horizontal plane; and
correct, based on the third rotation relationship, the position of the target object in the second image.

In an embodiment, the second rotation relationship is determined in the following manner:

determining, based on an output value of the inertial measurement unit, a fourth rotation relationship of a coordinate system of the inertial measurement unit with respect to a world coordinate system; and
setting a yaw angle corresponding to the fourth rotation relationship to zero, and retaining a pitch angle and a roll angle as the second rotation relationship.

In an embodiment, before determining whether the object at the second position is the same as the target object, the processor(s) is further configured to:

adjust brightness of the first image and brightness of the second image to be the same.

In an embodiment, the processor(s) is configured to:

adjust brightness of a first region of interest of the target object in the first image and brightness of a second region of interest of the object at the second position in the second image to be the same.

In an embodiment, before determining whether the object at the second position is the same as the target object, the processor(s) is further configured to:

determine whether the second position is in the second image;
if the second position is in the second image, it is determined whether the object at the second position is the same as the target object.

In an embodiment, before determining whether the object at the second position is the same as the target object, the processor(s) is further configured to:

determine second depth information of the object at the second position in the second image; and
adjust, based on a ratio relationship between the first depth information and the second depth information, a second region of interest of the object at the second position in the second image.

In an embodiment, the processor(s) is configured to:

obtain a first feature vector of a first region of interest of the target object in the first image, and obtain a second feature vector of a second region of interest of the object at the second position in the second image; and
determine whether the object at the second position is the same as the target object based on the first feature vector and the second feature vector.

In an embodiment, the processor(s) is configured to:

calculate a distance between each first feature vector and each second feature vector;
determine whether a distance between a first feature vector and a second feature vector that are closest to each other is less than or equal to a third preset distance; and
if the distance is less than or equal to the third preset distance, determine that the object at the second position is the same as the target object.

In an embodiment, the processor(s) is further configured to:

determine whether a distance from the first position to an edge of the first image is less than a fourth preset distance;
where if the distance from the first position to the edge of the first image is less than the fourth preset distance, the processor(s) is configured to estimate, based on the posture relationship between the second image acquisition device and the first image acquisition device as well as the first position, the second position of the target object in the second image acquired by the second image acquisition device.

Embodiments of the present disclosure further provide an unmanned aerial vehicle (UAV), including:

a body;
a power system, mounted to the body and configured to provide a flight power; and the target detection apparatus according to any of the foregoing embodiments.

The system, apparatus, modules and units described in the foregoing embodiments may be specifically implemented by a computer chip or entity, or implemented by product with a specific function. For ease of description, the foregoing apparatus may be divided into various units based on functions for separate descriptions. Certainly, functions of different units may be implemented in one or more pieces of software and/or hardware during implementation of this application. Persons skilled in the art would understand that the embodiments of the present invention may be provided as a method, a system, or a computer program product. Therefore, the present invention may adopt a form of a hardware only embodiment, a software only embodiment, or an embodiment combining software and hardware. Moreover, the present invention may use a form of a computer program product that is implemented on one or more computer-usable storage media (including, but not limited to, a disk memory, CD-ROM, an optical memory, and the like) that include computer-usable program code.

The embodiments in the specification are described in a progressive manner. For same or similar parts between embodiments, reference may be made to each other. Each embodiment focuses on a difference from other embodiments. The system embodiments are basically similar to the method embodiments, hence they are described in a relatively simple way. For the related parts, reference may be made to the description of the method embodiments.

It should be noted that, in this disclosure, relational terms such as first and second are only used to distinguish an entity or operation from another entity or operation, but do not necessarily require or imply that there is any actual relationship or order between these entities or operations. In addition, terms "include", "comprise", or any other variations thereof are intended to cover non-exclusive inclusion, so that a process, a method, an article, or a device including a series of elements not only includes those elements, but also includes other elements that are not explicitly listed, or also includes elements inherent to the process, the method, the article, or the device. Without further restrictions, the elements defined by the phrase "including a ..." do not exclude the existence of other identical element(s) in the process, method, article, or device including the element.

Described above are merely preferred embodiments of this application, which are not intended to limit this application. Various changes and modifications can be made to this application by those skilled in the art. Any modifications, equivalent replacements, improvements, etc. made within the spirits and principles of this application should be included within the scope of protection of this application.

## Claims

1. A target detection method, **characterized in that**, applicable to an unmanned aerial vehicle (UAV), the UAV comprising at least a first image acquisition device and a second image acquisition device, wherein the first image acquisition device and the second image acquisition device have different fields of view, the method comprising:

   determining a target object in a first image acquired by the first image acquisition device, and determining a first position of the target object in the first image;
   estimating, based on a posture relationship between the second image acquisition device and the first image acquisition device as well as the first position, a second position of the target object in a second image acquired by the second image acquisition device;
   determining whether an object at the second position is the same as the target object;
   if yes, recording the second position as a position of the target object in the second image.

2. The method according to claim 1, **characterized in that**, the determining of the target object in the first image acquired by the first image acquisition device includes:

   determining a box of a selection operation of a user;
   determining an object formed by pixels in the box as the target object.

3. The method according to claim 2, **characterized in that**, prior to the determining of the object formed by the pixels in the box as the target object, the determining of the target object in the first image acquired by the first image acquisition device further includes:

   synthesizing pixels in the first image into superpixels;
   wherein, the determining of the object formed by the pixels in the box as the target object includes:

   determining an object formed by those superpixels in the box as the target object.

4. The method according to claim 3, **characterized in that**, prior to the determining of the object formed by the superpixels in the box as the target object, the method further comprises:

   if there is a boundary superpixel through which an edge of the box passes, determining a proportion of the boundary superpixel located in the box;
   if the proportion is greater than or equal to a preset proportion, determining that the boundary superpixel is located in the box.

5. The method according to claim 1, **characterized in that**, the determining of the target object in the first image acquired by the first image acquisition device includes:

   determining a type of each object detected in the first image;
   determining an object, of which the type is the same as a preset type, as the target object.

6. The method according to claim 1, **characterized in that**, the estimating, based on the posture relationship between the second image acquisition device and the first image acquisition device as well as the first position, of the second position of the target object in the second image acquired by the second image acquisition device includes:

   determining first depth information of the target object in the first image;
   determining, based on first two-dimensional coordinates of a center point of the target object in the first image as well as the first depth information, first three-dimensional coordinates of the center point of the target object in a coordinate system of the first image acquisition device;
   determining, based on the posture relationship between the second image acquisition device and the first image acquisition device as well as the first three-dimensional coordinates, second three-dimensional coordinates of the center point of the target object in a coordinate system of the second image acquisition device;
   determining, based on the three-dimensional coordinates, second two-dimensional coordinates of the center point of the target object in the second image.

7. The method according to claim 6, **characterized in**

**that**, the determining of the first depth information of the target object in the first image includes:

determining, in the first image, pixels in a region from which a distance to the center point is less than a first preset distance, and calculating a mean of pixel values of the pixels;

determining, among the pixels, target pixels which have absolute values of differences between the pixel values of the target pixels and the mean less than or equal to a preset value;

determining the first depth information based on depth information of the target pixels.

8. The method according to claim 1, **characterized in that**, the estimating, based on the posture relationship between the second image acquisition device and the first image acquisition device as well as the first position, of the second position of the target object in the second image acquired by the second image acquisition device includes:

determining an epipolar line in the second image based on first two-dimensional coordinates of a center point of the target object in the first image, second two-dimensional coordinates of the center point of the target object in the second image, and an essential matrix equation of an epipolar constraint;

estimating, in a region from which a distance to the epipolar line is less than or equal to a second preset distance, the position of the target object.

9. The method according to claim 1, **characterized in that**, prior to the determining on whether the object at the second position is the same as the target object, the method further comprises:

correcting the position of the target object in the second image, so that the target object is perpendicular to a horizontal plane in the second image.

10. The method according to claim 9, **characterized in that**, the UAV includes an inertial measurement unit, and the correcting of the position of the target object in the second image includes:

determining a first rotation relationship of the second image acquisition device with respect to the inertial measurement unit, and a second rotation relationship from the inertial measurement unit to a coordinate system of the UAV with a body parallel to the horizontal plane when the second image acquisition device acquires the second image;

determining, based on the first rotation relationship and the second rotation relationship, a third rotation relationship from a coordinate system of the second image acquisition device, during acquisition of the second image, to the coordinate system of the UAV with the body parallel to the horizontal plane;

correcting, based on the third rotation relationship, the position of the target object in the second image.

11. The method according to claim 10, **characterized in that**, the second rotation relationship is determined in the following manner:

determining, based on an output value of the inertial measurement unit, a fourth rotation relationship of a coordinate system of the inertial measurement unit with respect to a world coordinate system;

setting a yaw angle corresponding to the fourth rotation relationship as zero, and retaining a pitch angle and a roll angle as the second rotation relationship.

12. The method according to any one of claims 1 to 11, **characterized in that**, prior to the determining on whether the object at the second position is the same as the target object, the method further comprises:

adjusting brightness of the first image and brightness of the second image to be the same.

13. The method according to claim 12, **characterized in that**, the adjusting of the brightness of the first image and the brightness of the second image to be the same includes:

adjusting brightness of a first region of interest of the target object in the first image and brightness of a second region of interest of the object at the second position in the second image to be the same.

14. The method according to any one of claims 1 to 11, **characterized in that**, prior to the determining on whether the object at the second position is the same as the target object, the method further comprises:

determining whether the second position is in the second image;

wherein, if the second position is in the second image, it is determined whether the object at the second position is the same as the target object.

15. The method according to any one of claims 1 to 11, **characterized in that**, prior to the determining on whether the object at the second position is the same as the target object, the method further comprises:

determining second depth information of the object at the second position in the second image; adjusting, based on a ratio relationship between the first depth information and the second depth information, a second region of interest of the object at the second position in the second image.

16. The method according to any one of claims 1 to 11, **characterized in that**, the determining on whether the object at the second position is the same as the target object includes:

obtaining a first feature vector of a first region of interest of the target object in the first image, and obtaining a second feature vector of a second region of interest of the object at the second position in the second image; determining whether the object at the second position is the same as the target object based on the first feature vector and the second feature vector.

17. The method according to claim 16, **characterized in that**, the determining on whether the object at the second position is the same as the target object based on the first feature vector and the second feature vector includes:

calculating a distance between each first feature vector and each second feature vector; determining whether a distance between a first feature vector and a second feature vector that are closest to each other is less than or equal to a third preset distance; if the distance is less than or equal to the third preset distance, determining that the object at the second position is the same as the target object.

18. The method according to any one of claims 1 to 11, **characterized in that**, prior to the estimating, based on the posture relationship between the second image acquisition device and the first image acquisition device as well as the first position, of the second position of the target object in the second image acquired by the second image acquisition device, the method further comprises:

determining whether a distance from the first position to an edge of the first image is less than a fourth preset distance; wherein, if the distance from the first position to the edge of the first image is less than the fourth preset distance, the second position of the target object in the second image acquired by the second image acquisition device is estimated based on the posture relationship between the second image acquisition device and the first image acquisition device as well as the first position.

19. A target detection apparatus, applicable to a UAV including at least a first image acquisition device and a second image acquisition device, wherein the first image acquisition device and the second image acquisition device have different fields of view, the apparatus comprises one or more processors operating independently or in coordination, and the processor(s) is configured to:

determine a target object in a first image acquired by the first image acquisition device, and determine a first position of the target object in the first image; estimate, based on a posture relationship between the second image acquisition device and the first image acquisition device as well as the first position, a second position of the target object in a second image acquired by the second image acquisition device; determine whether an object at the second position is the same as the target object; and if yes, record the second position as a position of the target object in the second image.

20. The apparatus according to claim 19, **characterized in that**, the processor(s) is configured to:

determine a box formed by a selection operation of a user; determine an object formed by pixels in the box as the target object.

21. The apparatus according to claim 20, **characterized in that**, prior to the determining of the object formed by the pixels in the box as the target object, the processor(s) is further configured to:

synthesize pixels in the first image into superpixels; wherein, the processor is configured to determine an object formed by superpixels in the box as the target object.

22. The apparatus according to claim 21, **characterized in that**, prior to the determining of the object formed by the superpixels in the box as the target object, the processor(s) is further configured to:

if there is a boundary superpixel through which an edge of the box passes, determine a proportion of the boundary superpixel located in the box; if the proportion is greater than or equal to a preset proportion, determine that the boundary superpixel is located in the box.

**23.** The apparatus according to claim 19, **characterized in that**, the processor(s) is configured to:

determine a type of each object detected in the first image;
determine an object, of which the type is the same as a preset type, as the target object.

**24.** The apparatus according to claim 19, **characterized in that**, the processor(s) is configured to:

determine first depth information of the target object in the first image;
determine, based on first two-dimensional coordinates of a center point of the target object in a center point of the first image as well as the first depth information, first three-dimensional coordinates of the center point of the target object in a coordinate system of the first image acquisition device;
determine, based on the posture relationship between the second image acquisition device and the first image acquisition device as well as the first three-dimensional coordinates, second three-dimensional coordinates of the center point of the target object in a coordinate system of the second image acquisition device;
determine, based on the three-dimensional coordinates, second two-dimensional coordinates of the center point of the target object in the second image.

**25.** The apparatus according to claim 24, **characterized in that**, the processor(s) is configured to:

determine, in the first image, pixels in a region from which a distance to the center point is less than a first preset distance, and calculate a mean of pixel values of the pixels;
determine, among the pixels, target pixels which have absolute values of differences between the pixel values of the target pixels and the mean less than or equal to a preset value;
determine the first depth information based on depth information of the target pixels.

**26.** The apparatus according to claim 19, **characterized in that**, the processor(s) is configured to:

determine an epipolar line in the second image based on first two-dimensional coordinates of a center point of the target object in the first image, second two-dimensional coordinates of the center point of the target object in the second image, and an essential matrix equation of an epipolar constraint;
estimate, in a region from which a distance to the epipolar line is less than or equal to a second preset distance, the position of the target object.

**27.** The apparatus according to claim 19, **characterized in that**, prior to the determining on whether the object at the second position is the same as the target object, the processor(s) is further configured to:

correct the position of the target object in the second image, so that the target object is perpendicular to a horizontal plane in the second image.

**28.** The apparatus according to claim 27, **characterized in that**, the processor(s) is configured to:

determine a first rotation relationship of the second image acquisition device with respect to the inertial measurement unit, and a second rotation relationship from the inertial measurement unit to a coordinate system of the UAV with a body parallel to the horizontal plane when the second image acquisition device acquires the second image;
determine, based on the first rotation relationship and the second rotation relationship, a third rotation relationship from a coordinate system of the second image acquisition device, during acquisition of the second image, to the coordinate system of the UAV with the body parallel to the horizontal plane;
correct, based on the third rotation relationship, the position of the target object in the second image.

**29.** The apparatus according to claim 28, **characterized in that**, the second rotation relationship is determined in the following manner:

determining, based on an output value of the inertial measurement unit, a fourth rotation relationship of a coordinate system of the inertial measurement unit with respect to a world coordinate system;
setting a yaw angle corresponding to the fourth rotation relationship as zero, and retaining a pitch angle and a roll angle as the second rotation relationship.

**30.** The apparatus according to any one of claims 19 to 29, **characterized in that**, prior to the determining on whether the object at the second position is the same as the target object, the processor(s) is further configured to:

adjust brightness of the first image and brightness of the second image to be the same.

**31.** The apparatus according to claim 30, **characterized**

**in that**, the processor(s) is configured to:

adjust brightness of a first region of interest of the target object in the first image and brightness of a second region of interest of the object at the second position in the second image to be the same.

32. The apparatus according to any one of claims 19 to 29, **characterized in that**, prior to the determining on whether the object at the second position is the same as the target object, the processor(s) is further configured to:

determine whether the second position is in the second image;
wherein if the second position is in the second image, it is determined whether the object at the second position is the same as the target object.

33. The apparatus according to any one of claims 19 to 29, **characterized in that**, prior to the determining on whether the object at the second position is the same as the target object, the processor(s) is further configured to:

determine second depth information of the object at the second position in the second image;
adjust, based on a ratio relationship between the first depth information and the second depth information, a second region of interest of the object at the second position in the second image.

34. The apparatus according to any one of claims 19 to 29, **characterized in that**, the processor(s) is configured to:

obtain a first feature vector of a first region of interest of the target object in the first image, and obtain a second feature vector of a second region of interest of the object at the second position in the second image;
determine whether the object at the second position is the same as the target object based on the first feature vector and the second feature vector.

35. The apparatus according to claim 34, **characterized in that**, the processor(s) is configured to:

calculate a distance between each first feature vector and each second feature vector;
determine whether a distance between a first feature vector and a second feature vector that are closest to each other is less than or equal to a third preset distance;
if the distance is less than or equal to the second preset distance, determine that the object at the second position is the same as the target object.

36. The apparatus according to any one of claims 19 to 29, **characterized in that**, the processor(s) is further configured to:

determine whether a distance from the first position to an edge of the first image is less than a fourth preset distance;
wherein if the distance from the first position to the edge of the first image is less than the fourth preset distance, the processor is configured to estimate, based on the posture relationship between the second image acquisition device and the first image acquisition device as well as the first position, the second position of the target object in the second image acquired by the second image acquisition device.

37. An unmanned aerial vehicle (UAV), **characterized in that**, comprising:

a body;
a power system, mounted to the body and configured to provide a flight power;
the target detection apparatus according to any one of claims 18 to 34.

Determine a target object in a first image acquired by the first image acquisition device, and determine a first position of the target object in the first image ⟿ S1

Estimate, based on a posture relationship between the second image acquisition device and the first image acquisition device as well as the first position, a second position of the target object in a second image acquired by the second image acquisition device ⟿ S2

Determine whether an object at the second position is the same as the target object ⟿ S3

If yes, record the second position as a position of the target object in the second image ⟿ S4

FIG. 1

FIG. 2

```
┌──────────────────────────────────────────────────────┐
│   Determine a box of a selection operation of a user   │───S11
└──────────────────────────────────────────────────────┘
                            │
                            ▼
┌──────────────────────────────────────────────────────┐
│  Determine an object formed by pixels in the box as the │───S12
│                      target object                      │
└──────────────────────────────────────────────────────┘
```

FIG. 3

```
┌──────────────────────────────────────────────────────┐
│   Determine a box of a selection operation of a user   │───S11
└──────────────────────────────────────────────────────┘
                            │
                            ▼
┌──────────────────────────────────────────────────────┐
│     Synthesize pixels in the first image into superpixels │───S13
└──────────────────────────────────────────────────────┘
                            │
                            ▼
┌──────────────────────────────────────────────────────┐
│ Determine an object formed by superpixels in the box as │───S121
│                    the target object                    │
└──────────────────────────────────────────────────────┘
```

FIG. 4

FIG. 5

FIG. 6

| Determine a box of a selection operation of a user | S11 |

↓

| Synthesize pixels in the first image into superpixels | S13 |

↓

| If there is a boundary superpixel through which an edge of the box passes, determine a proportion of the boundary superpixel located in the box | S14 |

↓

| If the proportion is greater than or equal to a preset proportion, determine that the boundary superpixel is located in the box | S15 |

↓

| Determine an object formed by superpixels in the box as the target object | S121 |

FIG. 7

| Determine a type of an object detected in the first image | S16 |

↓

| Determine an object, of which the type is the same as a preset type, as the target object | S17 |

FIG. 8

Determine first depth information of the target object in the first image — S21

Determine, based on first two-dimensional coordinates of a center point of the target object in the first image as well as the first depth information, first three-dimensional coordinates of the center point of the target object in a coordinate system of the first image acquisition device — S22

Determine, based on the posture relationship between the second image acquisition device and the first image acquisition device as well as the first three-dimensional coordinates, second three-dimensional coordinates of the center point of the target object in a coordinate system of the second image acquisition device — S23

Determine, based on the second three-dimensional coordinates, second two-dimensional coordinates of the center point (which specifically may be a center point of a region of interest of the target object) of the target object in the second image — S24

FIG. 9

Determine, in the first image, pixels in a region from which a distance to the center point is less than a first preset distance, and calculate a mean of pixel values of the pixels — S211

Determine, among the pixels, target pixels with absolute values of differences between the pixel values of the target pixels and the mean less than or equal to a preset value — S212

Determine the first depth information based on depth information of the target pixels — S213

FIG. 10

Determine an epipolar line in the second image based on first two-dimensional coordinates of a center point of the target object in the first image, second two-dimensional coordinates of the center point of the target object in the second image, and an essential matrix equation of an epipolar constraint ⌇S25

Estimate, in a region from which a distance to the epipolar line is less than or equal to a second preset distance, the position of the target object ⌇S26

FIG. 11

L

FIG. 12

| Determine a target object in a first image acquired by the first image acquisition device, and determine a first position of the target object in the first image | S1 |

| Estimate, based on a posture relationship between the second image acquisition device and the first image acquisition device as well as the first position, a second position of the target object in a second image acquired by the second image acquisition device | S2 |

| Correct the position of the target object in the second image, so that the target object is perpendicular to a horizontal plane in the second image | S5 |

| Determine whether an object at the second position is the same as the target object | S3 |

| If yes, record the second position as a position of the target object in the second image | S4 |

FIG. 13

FIG. 14

FIG. 15

| Determine a first rotation relationship of the second image acquisition device with respect to the inertial measurement unit, and a second rotation relationship from the inertial measurement unit to a coordinate system of the UAV with the body parallel to the horizontal plane when the second image acquisition device acquires the second image | S51 |

↓

| Determine, according to the first rotation relationship and the second rotation relationship, a third rotation relationship from a coordinate system of the second image acquisition device, during acquisition of the second image, to the coordinate system of the UAV with a body parallel to the horizontal plane | S52 |

↓

| Correct, according to the third rotation relationship, the position of the target object in the second image | S53 |

FIG. 16

| Determine, based on an output value of the inertial measurement unit, a fourth rotation relationship of a coordinate system of the inertial measurement unit with respect to a world coordinate system | S54 |

↓

| Set a yaw angle corresponding to the fourth rotation relationship to zero, and retain a pitch angle and a roll angle as the second rotation relationship | S55 |

FIG. 17

```
┌─────────────────────────────────────────────────────────┐
│ Determine a target object in a first image acquired by   │
│ the first image acquisition device, and determine a       │  ~ S1
│ first position of the target object in the first image    │
└─────────────────────────────────────────────────────────┘
                          │
                          ▼
┌─────────────────────────────────────────────────────────┐
│ Estimate, based on a posture relationship between the     │
│ second image acquisition device and the first image       │
│ acquisition device as well as the first position, a       │  ~ S2
│ second position of the target object in a second image    │
│ acquired by the second image acquisition device           │
└─────────────────────────────────────────────────────────┘
                          │
                          ▼
┌─────────────────────────────────────────────────────────┐
│ Adjust brightness of the first image and brightness of    │  ~ S6
│ the second image to be the same                           │
└─────────────────────────────────────────────────────────┘
                          │
                          ▼
┌─────────────────────────────────────────────────────────┐
│ Determine whether an object at the second position is     │  ~ S3
│ the same as the target object                             │
└─────────────────────────────────────────────────────────┘
                          │
                          ▼
┌─────────────────────────────────────────────────────────┐
│ If yes, record the second position as a position of the   │  ~ S4
│ target object in the second image                         │
└─────────────────────────────────────────────────────────┘
```

FIG. 18

| Determine a target object in a first image acquired by the first image acquisition device, and determine a first position of the target object in the first image | S1 |

| Estimate, based on a posture relationship between the second image acquisition device and the first image acquisition device as well as the first position, a second position of the target object in a second image acquired by the second image acquisition device | S2 |

| Adjust brightness of a first region of interest of the target object in the first image and brightness of a second region of interest of the object at the second position in the second image to be the same | S61 |

| Determine whether an object at the second position is the same as the target object | S3 |

| If yes, record the second position as a position of the target object in the second image | S4 |

FIG. 19

| Determine a target object in a first image acquired by the first image acquisition device, and determine a first position of the target object in the first image | S1 |

| Estimate, based on a posture relationship between the second image acquisition device and the first image acquisition device as well as the first position, a second position of the target object in a second image acquired by the second image acquisition device | S2 |

| Determine whether the second position is in the second image | S7 |

| If the second position is in the second image, determine whether an object at the second position is the same as the target object | S3 |

| if yes, record the second position as a position of the target object in the second image | S4 |

FIG. 20

Determine a target object in a first image acquired by the first image acquisition device, and determine a first position of the target object in the first image ⟿ S1

Estimate, based on a posture relationship between the second image acquisition device and the first image acquisition device as well as the first position, a second position of the target object in a second image acquired by the second image acquisition device ⟿ S2

Determine second depth information of the object at the second position in the second image ⟿ S8

Adjust, according to a ratio relationship between the first depth information and the second depth information, a second region of interest of the object at the second position in the second image ⟿ S9

Determine whether an object at the second position is the same as the target object ⟿ S3

If yes, record the second position as a position of the target object in the second image ⟿ S4

FIG. 21

Obtain a first feature vector of a first region of interest of the target object in the first image, and obtain a second feature vector of a second region of interest of the object at the second position in the second image ⟿ S41

Determine whether the object at the second position is the same as the target object based on the first feature vector and the second feature vector ⟿ S42

FIG. 22

Calculate a distance between each first feature vector and each second feature vector ⟝∿ S421

Determine whether a distance between a first feature vector and a second feature vector that are closest to each other is less than or equal to a third preset distance ⟝∿ S422

If the distance is less than or equal to the third preset distance, determine that the object at the second position is the same as the target object ⟝∿ S423

FIG. 23

Determine a target object in a first image acquired by the first image acquisition device, and determine a first position of the target object in the first image ⟝∿ S1

Determine whether a distance from the first position to an edge of the first image is less than a fourth preset distance ⟝∿ SA

Estimate, based on a posture relationship between the second image acquisition device and the first image acquisition device as well as the first position, a second position of the target object in a second image acquired by the second image acquisition device ⟝∿ S2

Determine whether an object at the second position is the same as the target object ⟝∿ S3

If yes, record the second position as a position of the target object in the second image ⟝∿ S4

FIG. 24

## INTERNATIONAL SEARCH REPORT

| International application No. |
|---|
| **PCT/CN2019/089671** |

**A.    CLASSIFICATION OF SUBJECT MATTER**

G06T 7/20(2017.01)i

According to International Patent Classification (IPC) or to both national classification and IPC

**B.    FIELDS SEARCHED**

Minimum documentation searched (classification system followed by classification symbols)

G06T; G06K; G06F

Documentation searched other than minimum documentation to the extent that such documents are included in the fields searched

Electronic data base consulted during the international search (name of data base and, where practicable, search terms used)

CNABS; CNTXT; DWPI; SIPOABS; CNKI: 无人机, 目标, 对象, 监测, 检测, 跟踪, 追踪, 摄像, 图像, 采集, 位置, 姿, 预, 估, 同, 二, 两, 多, aircraft, object, target, track+, detect+, image, camera, location, position, second, coordinate, estimat+, predict +, evaluat+, posture, orientation

**C.    DOCUMENTS CONSIDERED TO BE RELEVANT**

| Category* | Citation of document, with indication, where appropriate, of the relevant passages | Relevant to claim No. |
|---|---|---|
| A | CN 103997624 A (JIANGSU UNIVERSITY) 20 August 2014 (2014-08-20) entire document | 1-37 |
| A | CN 109791603 A (CONNAUGHT ELECTRONICS LTD.) 21 May 2019 (2019-05-21) entire document | 1-37 |
| A | CN 104574443 A (XI'AN UNIVERSITY OF TECHNOLOGY) 29 April 2015 (2015-04-29) entire document | 1-37 |
| A | WO 2016035252 A1 (DENSO CORP.) 10 March 2016 (2016-03-10) entire document | 1-37 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 August 2019** | **07 February 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2019/089671** |

| Patent document cited in search report | | | Publication date (day/month/year) | Patent family member(s) | | | Publication date (day/month/year) |
| --- | --- | --- | --- | --- | --- | --- | --- |
| CN | 103997624 | A | 20 August 2014 | CN | 103997624 | B | 05 April 2017 |
| CN | 109791603 | A | 21 May 2019 | EP | 3491581 | A1 | 05 June 2019 |
| | | | | KR | 20190025698 | A | 11 March 2019 |
| | | | | WO | 2018024600 | A1 | 08 February 2018 |
| | | | | US | 2019197321 | A1 | 27 June 2019 |
| | | | | DE | 102016114168 | A1 | 01 February 2018 |
| CN | 104574443 | A | 29 April 2015 | CN | 104574443 | B | 08 September 2017 |
| WO | 2016035252 | A1 | 10 March 2016 | JP | 2016053748 | A | 14 April 2016 |

Form PCT/ISA/210 (patent family annex) (January 2015)